(19) Europäisches Patentamt
European Patent Office
Office européen des brevets

(11) **EP 4 307 002 A1**

(12) **EUROPEAN PATENT APPLICATION**
published in accordance with Art. 153(4) EPC

(43) Date of publication:
**17.01.2024 Bulletin 2024/03**

(21) Application number: **21930053.0**

(22) Date of filing: **09.03.2021**

(51) International Patent Classification (IPC):
*G01S 13/90* $^{(2006.01)}$

(52) Cooperative Patent Classification (CPC):
**G01S 13/90**

(86) International application number:
**PCT/JP2021/009209**

(87) International publication number:
**WO 2022/190196 (15.09.2022 Gazette 2022/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NEC Corporation**
**Tokyo 108-8001 (JP)**

(72) Inventors:
• **YAMAGUCHI Yuki**
**Tokyo 108-8001 (JP)**
• **TANAKA Taichi**
**Tokyo 108-8001 (JP)**

(74) Representative: **Betten & Resch**
**Patent- und Rechtsanwälte PartGmbB**
**Maximiliansplatz 14**
**80333 München (DE)**

(54) **CHANGE DETECTION DEVICE AND CHANGE DETECTION METHOD**

(57) The change detection device 10 includes a three-dimensional structure reconstruction unit 11 which reconstructs a three-dimensional structure of a predetermined area in an observed area, a phase eliminator 12 which eliminates phase signals in the predetermined area in multiple SAR images in which the observed area is taken, using the three-dimensional structure, and a change detection unit 13 which generates a coherence image from a SAR image pair from which the phase signals are eliminated and detects change in the observed area based on coherence values of pixels constituting the coherence image.

FIG. 16

EP 4 307 002 A1

## Description

## Technical Field

This invention relates to a change detection device and a change detection method that performs change detection based on SAR images.

## Background Technology

There is a change detection technology that detects areas where the state of the ground surface has changed based on images taken from high altitudes, such as images taken by satellites.

Synthetic aperture radar (SAR) technology is a technology which can acquire an image (hereinafter referred to as a SAR image) equivalent to the image by an antenna having a large aperture, when a radar mounted on a flying object such as an artificial satellite, an aircraft, or the like transmits and receives a radio wave while the flying object moves. The synthetic aperture radar is utilized, for example, for analyzing a ground surface deformation by signal processing of reflected waves from the ground surface, etc.

An image taken by a flying object such as a satellite is called an observation image. In this specification, an observation image corresponds to a SAR image. Hereinafter, a flying object that transmits and receives electromagnetic waves is assumed to be a satellite, but a flying object is not limited to a satellite.

For example, a change detection technique using coherence (Coherent Change Detection) is described in patent literature 1. The coherence is calculated by complex correlation of pixels at the same position in multiple SAR images among K (K≥2) SAR images. Suppose that (p, q) is a pair of SAR images and $c_{p, q}$ are components of the coherence matrix. Respective p and q are less than or equal to K and indicate one of the K SAR images. The phase $\theta_{p, q}$ (specifically, the phase difference) is calculated for each pair of SAR images. Then, an absolute value of the value acquired by averaging $\exp(-j\theta_{p, q})$ for a plurality of pixels in a predetermined area including pixels for coherence calculation is the component $c_{p, q}$ of the coherence matrix. $A_p.A_q.\exp(-j\theta_{p, q})$ may be averaged, where intensity in SAR image p is as $A_p$ and intensity in SAR image q is as $A_q$.

The values represented by components of a coherence matrix are coherence values. A coherence image in which the coherence values are pixel values is supposed.

A change detection device that uses a change detection technique that utilizes coherence performs change detection based on a coherence image. The change detection device determines that a change has occurred when it detects an area with a low coherence value in the coherence image. For example, the change detection device generates a coherence image from a SAR image that has already been acquired and a new SAR image targeting the same area of observation as when the SAR image was acquired. As an example, a change occurs in an area when a new structure appears or an existing structure disappears.

Hereinafter, SAR images that have already been acquired are referred to as stored SAR images. Newly acquired SAR images are sometimes referred to as SAR images to be compared. Multiple SAR images are sometimes referred to as a group of SAR images. For example, a group of SAR images that has already been acquired consists of multiple SAR images that have already been acquired.

## Citation List

## Patent Literature

PTL 1: European Patent Application Publication No. 3540462
PTL 2: Japanese Patent Application Publication No. 2008-185375

## Summary of Invention

## Technical Problem

SAR images can be affected by layover. For example, in urban areas where structures exist in the observed area, reflected waves from tall and low structures and from the ground surface are mixed in the radar mounted on a satellite. As a result, the received waveform of the radar mounted on the satellite becomes unstable. Specifically, in a SAR image, layover of overlaying information of tall structures on information of low structures may occur. In a situation where layover occurs, changes may occur among multiple SAR images even if no changes actually occur in the observed area.

When a change occurs between multiple SAR images, the coherence value decreases in the coherence image because the similarity between the SAR images decreases. In such a case, the sensitivity of change detection using coherence is reduced. For example, even if there is no actual change in the observed area, it may be misidentified as a change.

For reducing influence of layover on SAR images, there is a technique that uses the three-dimensional structure of the observed area estimated from SAR images (for example, refer to patent literature 2). The device described in patent literature 2 inputs multiple SAR images. The device converts the difference in distortion between the multiple SAR images into a height. Further, the device generates three-dimensional shape data (three-dimensional information) of the observed area using the height information.

It is assumed that the technology that uses the three-dimensional structure estimated from multiple SAR images is applied to a change detection device that uses a change detection technology. The change detection device to which this technology is applied will be referred to as the applicable device.

The applicable device generates three-dimensional information to reduce influence of layover from the multiple SAR images before the change (before the change occurs in the observed area). The applicable device also generates three-dimensional information to reduce influence of layover from the multiple newly acquired SAR images. Then, the applicable device performs change detection by referring to both three-dimensional information.

To perform the change detection described above, multiple SAR images are needed multiple newly acquired SAR images after the change, as well as multiple SAR images before the change. In other words, a large number of SAR images are needed to reduce influence of layover. In addition, the applicable device performs processing to generate three-dimensional information using multiple SAR images before the change and processing to generate three-dimensional information using multiple newly acquired SAR images after the change. Therefore, many image acquisitions are required to reconstruct the three-dimensional structure before and after the change. Accordingly, image acquisition requires great care and time.

It is an object of the present invention to provide a change detection device and a change detection method that can perform change detection with reduced influence of layover without reconstructing a three-dimensional structure after the change.

**Solution to Problem**

The change detection device according to the present invention includes three-dimensional structure reconstruction means for reconstructing a three-dimensional structure of a predetermined area in an observed area, phase elimination means for eliminating phase signals in the predetermined area in multiple SAR images in which the observed area is taken, using the three-dimensional structure, and change detection means for generating a coherence image from a SAR image pair from which the phase signals are eliminated and detecting change in the observed area based on coherence values of pixels constituting the coherence image.

The change detection method according to the present invention includes reconstructing a three-dimensional structure of a predetermined area in an observed area, eliminating phase signals in the predetermined area in multiple SAR images in which the observed area is taken, using the three-dimensional structure, and generating a coherence image from a SAR image pair from which the phase signals are eliminated and detecting change in the observed area based on coherence values of pixels constituting the coherence image.

The change detection program according to the present invention causes the computer to execute a process of reconstructing a three-dimensional structure of a predetermined area in an observed area, a process of eliminating phase signals in the predetermined area in multiple SAR images in which the observed area is taken, using the three-dimensional structure, and a process of generating a coherence image from a SAR image pair from which the phase signals are eliminated and detecting change in the observed area based on coherence values of pixels constituting the coherence image.

**Advantageous Effects of Invention**

According to the present invention, change detection can be performed with reduced influence of layover without reconstructing a three-dimensional structure after the change.

**Brief Description of Drawings**

[Fig. 1] It depicts a block diagram showing a configuration example of the change detection device of the first example embodiment.
[Fig. 2] It depicts a flowchart showing an example of an operation of the change detection device of the first example embodiment.
[Fig. 3] It depicts an explanatory diagram for explaining SAR tomography.
[Fig. 4] It depicts a flowchart showing the three-dimensional structure reconstruction process in the first example embodiment.
[Fig. 5] It depicts a flowchart showing the phase signal elimination process.
[Fig. 6] It depicts a flowchart showing the coherent change detection process.
[Fig. 7] It depicts a block diagram showing a configuration example of the change detection device of the second example embodiment.
[Fig. 8] It depicts a flowchart showing an operation of the change detection device in the second example embodiment.
[Fig. 9] It depicts a flowchart showing the three-dimensional structure reconstruction process in the second example embodiment.
[Fig. 10] It depicts a block diagram showing a configuration example of the change detection device of the third example embodiment.
[Fig. 11] It depicts a flowchart showing an operation of the change detection device in the third example embodiment.
[Fig. 12] It depicts a block diagram showing a modification of the change detection device of the third example embodiment.
[Fig. 13] It depicts a flowchart showing an operation of a modification of the change detection device in the third example embodiment.

[Fig. 14] It depicts a block diagram showing a configuration example of the change detection device of the fourth example embodiment.

[Fig. 15] It depicts a block diagram showing an example of a computer having a CPU.

[Fig. 16] It depicts a block diagram showing the main part of the change detection device.

[Fig. 17] It depicts a block diagram showing the main part of another change detection device.

[Fig. 18] It depicts a block diagram showing the main part of still another change detection device.

**Description of Embodiments**

Hereinafter, example embodiments of the present invention will be explained with reference to the drawings.

Example embodiment 1.

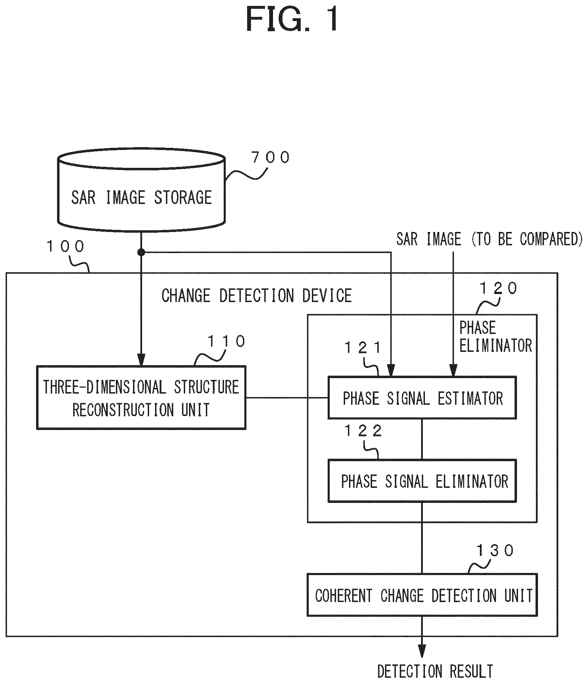

Fig. 1 is a block diagram showing a configuration example of the change detection device of the first example embodiment. The change detection device 100 shown in Fig. 1 comprises a three-dimensional structure reconstruction unit 110, a phase eliminator 120, and a coherent change detection unit 130.

The three-dimensional structure reconstruction unit 110 reconstructs a three-dimensional structure of the observed area from multiple SAR images stored in the SAR image storage 700.

The phase eliminator 120 includes a phase signal estimator 121 and a phase signal eliminator 122. The phase signal estimator 121 estimates a phase signal in a predetermined area in the observed area from the SAR image pair. The predefined area is an area where layover may occur (layover area). The phase eliminator 120 eliminates phase signals in the layover area.

As described above, layover may occur when, for example, tall structures are present in the observed area. Received signals from the layover area are a mixture of signals originating from various reflectors. Therefore, even if no changes occur on the ground surface, the similarity of received signals between SAR images decreases and coherence is reduced. In this example embodiment, the phase eliminator 120 refers to the three-dimensional structure of the observed area and eliminates phase signals caused by the height (height of the structure) that causes the layover. For example, the phase eliminator 120 uses three-dimensional point cloud data with information on intensity and phase reconstructed by SAR tomography to simulate signal mixing in the layover area. In other words, the phase eliminator 120 predicts phases that are not related to changes in the ground surface (i.e., phases caused by the height of structures). The phase eliminator 120 then eliminates signals with such phases from the observed signals.

In addition, a phase signal due to height is considered to be highly variable among multiple SAR images. Therefore, elimination of a phase signal due to height reduces the change between multiple SAR images when no change actually occurs. As a result, more accurate coherent change detection can be performed even in the layover area.

The coherent change detection unit 130 generates a coherence image from one of the SAR images stored in the SAR image storage 700 and the SAR image to be compared. The coherent change detection unit 130 uses the coherence image to determine whether a change has occurred in the observed area. The SAR image to be compared may be a newly acquired SAR image or a SAR image selected from multiple SAR images stored in the SAR image storage 700.

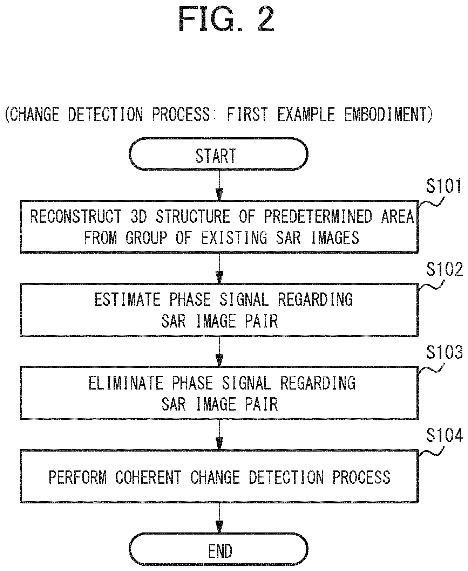

Next, the overall operation of the change detection device 100 of the first example embodiment will be explained with reference to the flowchart of Fig. 2.

The three-dimensional structure reconstruction unit 110 reads a group of existing SAR images from the SAR image storage 700. Then, the three-dimensional structure reconstruction unit 110 reconstructs the three-dimensional structure of a predetermined area in the observed area using a SAR tomography technique (step S101).

In the phase eliminator 120, the phase signal estimator 121 reads one SAR image from the SAR image storage 700. The phase signal estimator 121 also inputs the SAR image to be compared. The phase signal estimator 121 estimates a phase signal of the SAR image pair of the SAR image read from the SAR image storage 700 and the SAR image to be compared in the layover area, utilizing the three-dimensional structure (step S102).

The phase signal eliminator 122 eliminates the phase signal of the SAR image pair estimated by the phase signal estimator 121 (step S103).

The coherent change detection unit 130 calculates a coherence value between the SAR images in the SAR image pair. The coherent change detection unit 130 generates a coherence image with the coherence values as pixel values. The coherent change detection unit 130 performs the coherent change detection process (step S104). That is, the coherent change detection unit 130 determines whether or not there is an area in the observed area where a change has occurred.

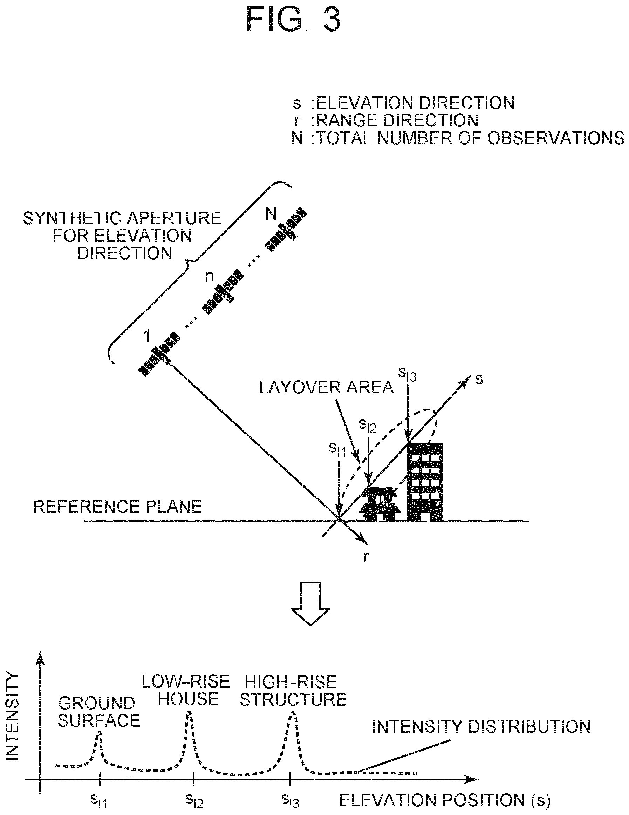

As described above, the three-dimensional structure reconstruction unit 110 reconstructs the three-dimensional structure of a predetermined area in a three-dimensional structure reconstruction process using a SAR tomography technique. Fig. 3 is an explanatory diagram for explaining SAR tomography. In the example shown in Fig. 3, the satellite travels in the vertical direction to the sheet. That is, the azimuth direction is the vertical direction to the sheet. Then, in n (n = 1 to N) orbits, the satellite acquires SAR images of a predetermined observed area. In Fig. 3, r indicates the range direction. s indicates the elevation direction. N corresponds to the number of SAR images stored in the SAR image storage 700.

Let the observed value (received signal) at a certain azimuth-range position be g = $(g_1, ..., g_N)^T$. T denotes transposition.

Let the complex reflectivity distribution (three-dimensional distribution of complex reflectivity) be $\gamma = [\gamma(s_1), ..., \gamma(s_L)]^T$. $s_1$(1 = 1 to L) denotes the position (point) in the elevation direction.

Let the elements of the steering matrix be R = exp $(-4j\pi k_n s_1)$. $k_n$ is a phase-to-elevation conversion coefficient.

The relationship between the observed value g at the azimuth-range position, the complex reflectivity distribution $\gamma$, and the steering matrix R is shown in equation (1) below.

$$g = R\gamma \qquad (1)$$

The three-dimensional structure reconstruction unit 110 can estimate (calculate) the complex reflectivity distribution $\gamma$ at each position in the elevation direction from the observed values g and the steering matrix R. The complex reflectivity distribution $\gamma$ includes intensity information and phase information. Therefore, the three-dimensional structure reconstruction unit 110 can acquire three-dimensional point cloud data representing the three-dimensional structure by estimating the complex reflectivity distribution $\gamma$ at each pixel. The three-dimensional point cloud data is data of each point in the three-dimensional coordinates.

The bottom row in Fig. 3 shows an example of intensity distribution. In the example shown in Fig. 3, the intensity of reflected waves from a low-rise house is higher than the intensity of reflected waves from the ground surface (ground). Compared to the intensity of reflected waves from the ground, the intensity of reflected waves from a high-rise structure is higher.

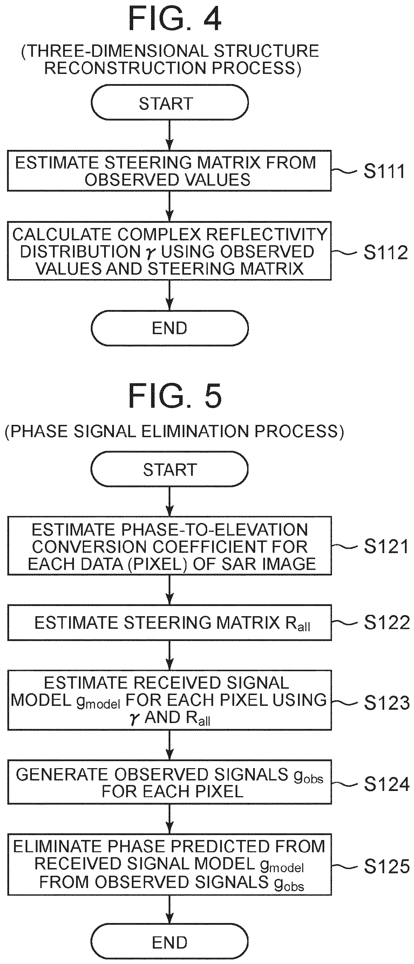

Fig. 4 is a flowchart showing the three-dimensional structure reconstruction process performed by the three-dimensional structure reconstruction unit 110.

The three-dimensional structure reconstruction unit 110 reads a group of existing SAR images (multiple SAR images: in this case, about 10 or more for SAR tomography) from the SAR image storage 700. Then, the three-dimensional structure reconstruction unit 110 estimates (calculates) a steering matrix Ri from the observed values $g_1$ of the SAR images (step S111). The three-dimensional structure reconstruction unit 110 also calculates the complex reflectivity distribution $\gamma$ using equation (1) (in this case, $g_1 = R_1\gamma$) (step S112).

Fig. 5 is a flowchart showing the phase signal elimination process performed by the phase eliminator 120.

The phase signal estimator 121 in the phase eliminator 120 reads an existing SAR image from the SAR image storage 700. The phase signal estimator 121 also inputs a SAR image to be compared. The phase signal estimator 121 interferes with the existing SAR image and the SAR image to be compared for each pixel of the SAR image, and estimates (calculates) a phase-to-elevation conversion coefficient for converting the phase included in each pixel after the interference into height (step S121).

The phase signal estimator 121 estimates (calculates) the steering matrix $R_{all}$ based on the phase-to-elevation conversion coefficient for each pixel (step S122). $R_{all}$ shows the steering matrix for each point based on all existing SAR images and SAR image to be compared data. Further, the phase signal estimator 121 estimates (calculates) a received signal model $g_{model}$ for each pixel of the SAR image from the complex reflectivity distribution $\gamma$ and the steering matrix $R_{all}$ (step S123). The received signal model $g_{model}$ is a model inferred from the three-dimensional structure, i.e., predicted observed values in the layover area.

The phase signal eliminator 122 in the phase eliminator 120 generates observed signals (observed values, i.e., pixel values of the SAR image) $g_{obs}$ (step S124). The observed values $g_{obs}$ are the observed signals of the existing SAR image and the observed signals of the SAR image to be compared, respectively.

The phase signal eliminator 122 eliminates the phase signal predicted from the received signal model $g_{model}$ from the observed values $g_{obs}$ for each pixel of the SAR image, as expressed in equation (2) (step S125).

$$g_{obs} \exp(-j\angle g_{model}) \qquad (2)$$

The phase eliminator 120 outputs a SAR image pair with the phase eliminated in a predetermined area to the coherent change detection unit 130.

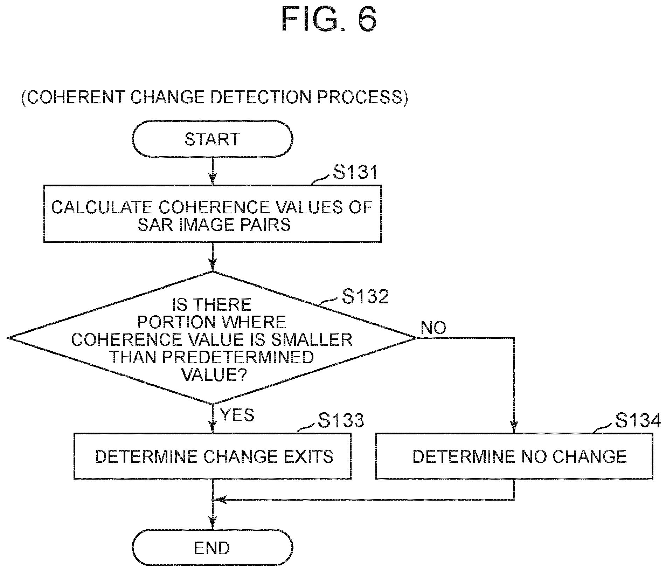

Fig. 6 is a flowchart showing the coherent change detection process performed by the coherent change detection unit 130.

The coherent change detection unit 130 calculates coherence values between the SAR images of the SAR image pairs from the phase eliminator 120 (step S131). In other words, the coherent change detection unit 130 generates a coherence image with the coherence values as pixel values. The coherent change detection unit 130 determines whether there is a portion in the observed area where the coherence value is smaller than, for example, a predetermined threshold value (step S132). When such a portion exists, the coherent change detection unit 130 determines that a change has occurred in the observed area (step S133). When no such portion exists, the coherent change detection unit 130 determines that no change has occurred in the observed area (step S134).

For example, the coherent change detection unit 130 determines that a change has occurred in the observed area when the values (coherence values) of all pixels in an area (portion) of a predetermined size in the coherence image are smaller than a predetermined threshold value. The coherent change detection unit 130 may determine that a change has occurred in the observed area when there are more than a predetermined percentage of pixels, whose coherence values are smaller than a predetermined threshold value, in an area of a predetermined size.

As explained above, in this example embodiment, the three-dimensional structure reconstruction unit 110 reconstructs the three-dimensional structure of the layover area using a SAR tomography technique. The phase eliminator 120 estimates the received signal model $g_{model}$ from the three-dimensional structure. The phase eliminator 120 then eliminates the phase predicted from the received signal model $g_{model}$ from the observed signals. The phase to be eliminated is, for example, the phase due to the height of the structure. Since the height of the structure is a cause of layover, the observed signals from which the phase is eliminated are signals from which influence of the layover is excluded.

Therefore, the coherent change detection unit 130 can perform a coherent change detection process based on the observation signals from which the phase due to the height of the structure has been eliminated. In other words, the coherent change detection unit 130 can perform a coherent change detection process in which influence of the layover is excluded. In addition, the coherent change detection unit 130 can perform a coherent change detection process with high accuracy in the layover area.

Further, the change detection device 100 does not require great care for acquiring a sufficient number of SAR images to reconstruct a three-dimensional structure after the change, compared to the process of generating three-dimensional information using multiple SAR images before the change and multiple newly acquired SAR images after the change. That is because the change detection device 100 does not require a process of generating three-dimensional information using multiple SAR images to be compared.

It is also possible to reconstruct a three-dimensional structure using DEM (Digital Elevation Model) and eliminate a phase signal in the layover area by referring to the three-dimensional structure. However, when using SAR tomography, phase signal elimination can be performed more precisely than when using DEM. That is because the phase signals can be estimated for each structure such as a building when the three-dimensional structure is reconstructed using SAR tomography, while only phase information regarding large structures is reflected in the three-dimensional when using DEM. In addition, when a three-dimensional structure is reconstructed using SAR tomography, accurate phase signal estimation is possible even if the structures are complexly distributed in the observed area.

When a three-dimensional structure is reconstructed using SAR tomography, a received signal model is generated that is closer to the actual three-dimensional structure than when a three-dimensional structure is reconstructed using DEM. That is because when using SAR tomography, three-dimensional point cloud data with intensity and phase information is generated. In addition, as described below, reconstruction of a three-dimensional structure by using SAR tomography has the advantage that a received signal model that is closer to the actual three-dimensional structure can be generated, as compared with reconstruction of a three-dimensional structure by using LiDAR (Light Detection and Ranging).

Example embodiment 2.

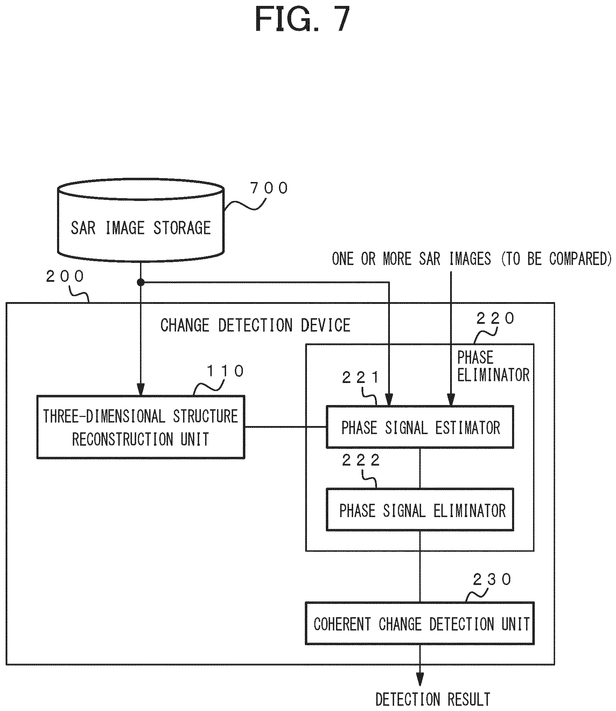

Fig. 7 is a block diagram showing a configuration example of the change detection device of the second example embodiment. The change detection device 200 shown in Fig. 7 comprises a three-dimensional structure reconstruction unit 110, a phase eliminator 220, and a coherent change detection unit 230. The configuration and operation of the three-dimensional structure reconstruction unit 110 are the same as those in the first example embodiment.

In this example embodiment, the SAR image storage 700 stores, for example, respective SAR images for one observed area acquired in each orbit (path) among multiple orbits (multipath) of the satellite that are displaced from each other. The phase eliminator 220 inputs multiple SAR images acquired in multiple orbits.

It should be noted that when an aircraft is used as a flying object, there is more freedom in the choice of paths than when a satellite is used.

The phase eliminator 220 includes a phase signal estimator 221 and a phase signal eliminator 222. In this example embodiment, the phase signal estimator 221 inputs a group of SAR images including multiple SAR images stored in the SAR image storage 700 and one or more SAR images to be compared. The one or more SAR images to be compared may all be newly acquired SAR images, or may include both SAR images selected from the multiple SAR images stored in the SAR image storage 700 and newly acquired SAR images. The phase signal estimator 221 estimates the phase signals in a predetermined area (layover area) of all the SAR images constituting a group of SAR images. The phase eliminator 220 eliminates phase signals in the layover area of all SAR images.

The coherent change detection unit 230 generates coherence images for all SAR image pairs. The coherent change detection unit 230 uses the generated multiple coherence images to determine whether a change has occurred in the observed area. Every SAR image pair is a combination of each of all SAR images that comprise a group of SAR images. As an example, when a group of SAR images includes four SAR images, there are six ($=_4 C_2$) SAR image pairs.

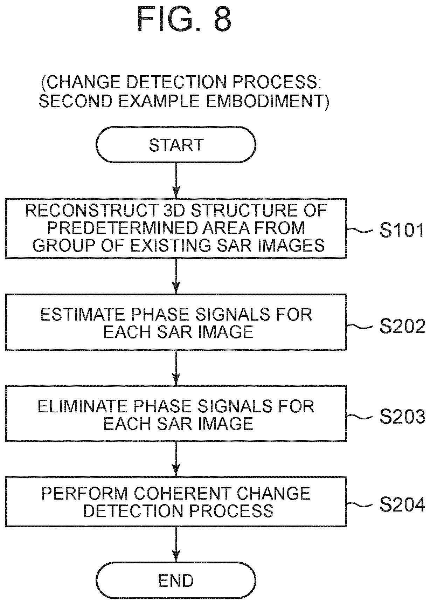

Next, the overall operation of the change detection device of the second example embodiment will be explained with reference to the flowchart of Fig. 8.

The three-dimensional structure reconstruction unit 110 operates in the same manner as in the first example embodiment to reconstruct the three-dimensional structure of a predetermined area in the observed area (step S101).

In the phase eliminator 220, the phase signal estimator 221 estimates phase signals in a predetermined area (layover area) of all SAR images with reference to the three-dimensional structure (step S202).

The phase signal eliminator 222 eliminates the phase signals estimated by the phase signal estimator 221 for all SAR images (step S203). The specific method of phase signal estimation and elimination is the same as the method in the first example embodiment (refer to Fig. 5, etc.).

The phase eliminator 220 outputs all SAR images from which the phase of the predetermined area has been eliminated to the coherent change detection unit 230. The coherent change detection unit 230 performs the coherent change detection process (step S204). That is, the coherent change detection unit 130 determines whether a change has occurred in the observed area.

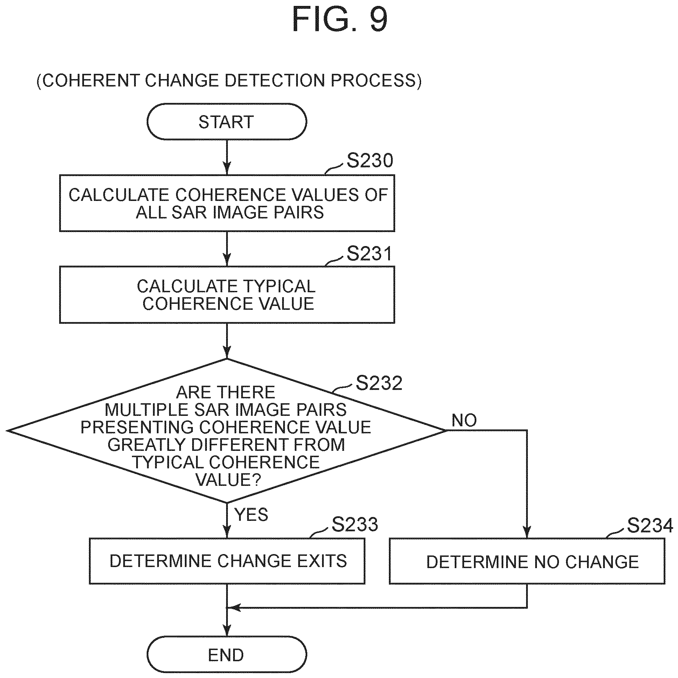

Fig. 9 is a flowchart showing the coherent change detection process performed by the coherent change detection unit 230.

The coherent change detection unit 230 calculates coherence values of all combinations (pairs) of SAR images in a group of SAR images (multiple SAR images stored in the SAR image storage 700 and one or more SAR images to be compared are included) (step S230).

The coherent change detection unit 230 also calculates a typical coherence value for determining whether a change has occurred in the observed area (step S231). The typical coherence value corresponds to a coherence value between SAR images of a SAR image pair with no change or a change smaller than a predetermined acceptable value.

The coherent change detection unit 230 arranges the calculated coherence values for all SAR image pairs in a two-dimensional array, for example, to acquire the typical coherence values. In other words, the coherent change detection unit 230 generates a coherence matrix with the calculated coherence values as elements. When SAR images are assigned image numbers, the horizontal axis of the two-dimensional array corresponds to the image number of one SAR image in all SAR image pairs. The vertical axis of the two-dimensional array corresponds to the image number of the other SAR image in all SAR image pairs.

The coherent change detection unit 230 takes, for example, the largest coherence value in a two-dimensional array as the typical coherence value.

The coherent change detection unit 230 compares the coherence values between SAR images of all SAR image pairs with the typical coherence value. When there are multiple SAR image pairs that present coherence values that are greatly different from the typical coherence values, the coherent change detection unit 230 determines that a change has occurred in the observed area (step S233). When there are no such SAR image pairs, the coherent change detection unit 230 determines that no change has occurred in the observed area (step S234).

The "difference" in the coherence value with a great difference from the typical coherence value is a pre-defined value. The "multiple" in the case of multiple SAR images with a great difference in coherence value is a pre-defined value.

In this example embodiment, use of multiple SAR images acquired in a multipath in coherent change detection has the effect of improving the robustness of coherent change detection in addition to the effect of the first example embodiment.

In general, the acquisition times of SAR images acquired in each pass in a multipath are different. Therefore, when a group of SAR images includes multiple SAR images to be compared, it is possible to recognize when a change occurred in the observed area based on the acquisition time of the SAR image to be compared in the SAR image pair that presents a coherence value with a great difference from the typical coherence value.

Example embodiment 3.

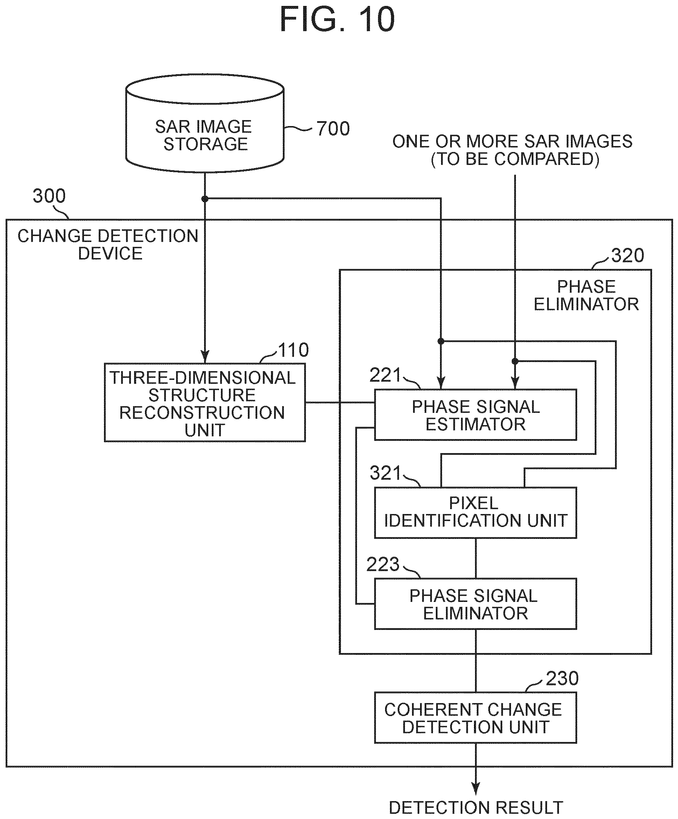

Fig. 10 is a block diagram showing an example configuration of the change detection device of the third example embodiment. The change detection device 300 shown in Fig. 10 comprises a three-dimensional structure reconstruction unit 110, a phase eliminator 320, and a coherent change detection unit 230. The configuration and operation of the three-dimensional structure reconstruction unit 110 are the same as those in the first and second example embodiments. The configuration and operation of the coherent change detection unit 230 are the same as those in the second example embodiment.

The phase eliminator 320 includes a phase signal estimator 221, a pixel identification unit 321, and a phase signal eliminator 223. The configuration and operation of the phase signal estimator 221 are the same as those in the second example embodiment. That is, the phase signal estimator 221 inputs a group of SAR images including multiple SAR images stored in the SAR image storage 700 and one or more SAR images to be compared. The phase signal estimator 221 estimates phase signals in a predetermined area (layover area) for all SAR images comprising the group of SAR images.

The phase signal eliminator 223 eliminates phase signals of the pixels identified by the pixel identification unit 321 for all SAR images.

The pixel identification unit 321 identifies pixels in each SAR image from which phase signals should be eliminated.

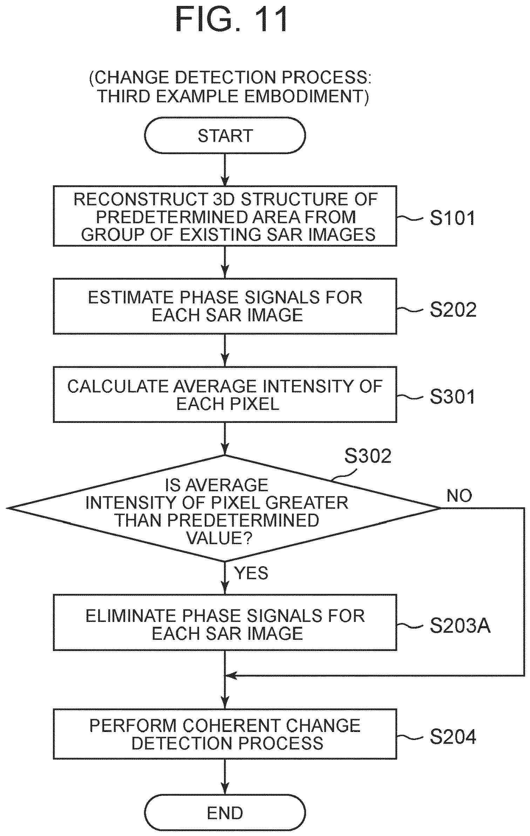

Next, the operation of the change detection device of the third example embodiment will be explained with reference to the flowchart of Fig. 11.

The three-dimensional structure reconstruction unit 110 operates as in the first and second example embodiments to reconstruct a three-dimensional structure of a predetermined area in the observed area (step S101). In the phase eliminator 220, the phase signal estimator 221 operates as in the first and second example embodiments to estimate phase signals in the predetermined area for all SAR images (step S202).

The pixel identification unit 321 calculates average intensity (each of average intensities of pixels at the same location in multiple SAR images) of each pixel in the SAR image over all SAR images (step S301).

When the average intensity of the pixel is greater than a predetermined value (a threshold for filtering of pixel selection), the pixel identification unit 321 identifies the pixel as a pixel from which the phase signal should be eliminated (step S302). In that case, the process moves to step S203A. When the average intensity of the pixel is less than or equal to the predetermined value, the process moves to step S204. In step S302, the pixel identification unit 321 targets all SAR images, therefore compares the intensity of each pixel in each SAR image with the average intensity of the pixel. Then, when the intensity of the pixel is greater than the average intensity of the pixel, the pixel identification unit 321 identifies the pixel in the SAR image (SAR image whose pixels are subject to the comparison process with the average intensity among all SAR images) as the pixel from which the phase signal is to be eliminated.

In step S203A, the phase signal eliminator 222 eliminates the phase signals of the pixels identified by the pixel identification unit 321 for all SAR images. The specific method of phase signal estimation and elimination is the same as the method in the first example embodiment (refer to Fig. 5, etc.). However, in this example embodiment, the phase signal eliminator 222 eliminates the phase predicted from the received signal model $g_{model}$ from the pixel identified by the pixel identification unit 321 in the observation signal. Then, the process moves to step S204.

In step S204, the coherent change detection unit 230 performs the coherent change detection process as in the second example embodiment.

In this example embodiment, when the average intensity of a pixel is greater than a predetermined value, the phase signal of the pixel in the SAR image is eliminated. In other words, pixels with low intensity are not subject to phase signal elimination. The reliability of phase information for pixels with low intensity may be low. If the coherent change detection process is performed after the phase signal elimination process is applied to such pixels, there is rather a risk of false detection of coherent change. When the phase signal elimination process is not applied to pixels with low intensity, as in this example embodiment, the possibility of false detection of coherent change is expected to be reduced.

[Modifi cation]

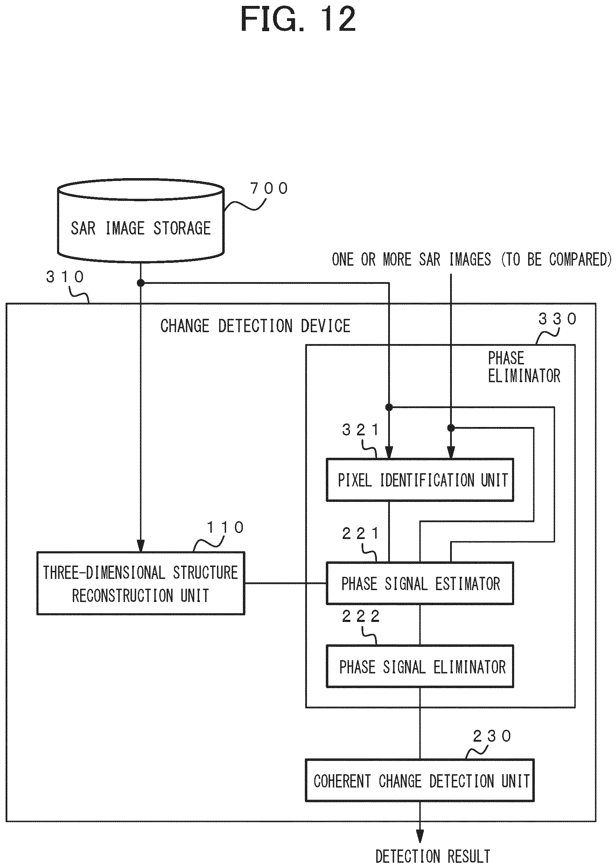

Fig. 12 is a block diagram showing a modification of the change detection device of the third example embodiment. The change detection device 310 shown in Fig. 12 comprises a three-dimensional structure reconstruction unit 110, a phase eliminator 330, and a coherent change detection unit 230. The phase eliminator 330 includes a pixel identification unit 321, a phase signal estimator 221, and a phase signal eliminator 222. Unlike the third example embodiment, in this modification, the pixel identification unit 321 operates before the phase signal is estimated.

The configuration and operation of the three-dimensional structure reconstruction unit 110 are the same as those in the first to third example embodiments. The configuration and operation of the coherent change detection unit 230 are the same as those in the second and third example embodiments.

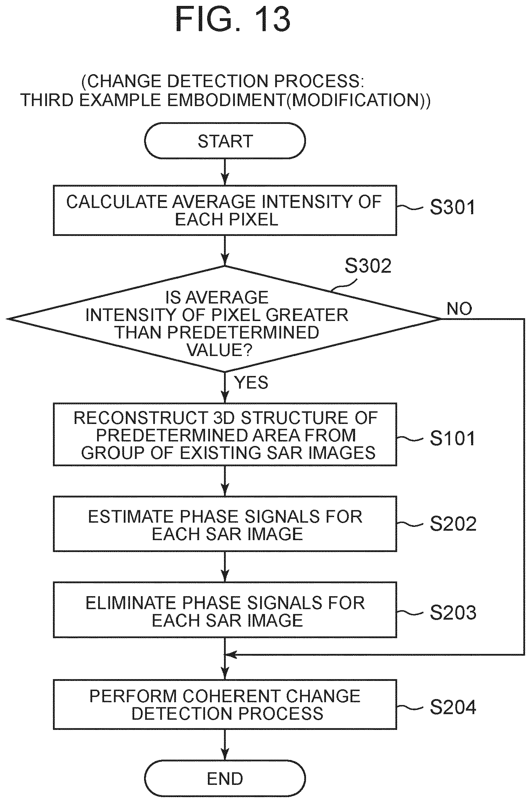

Next, the operation of the change detection device 310 of the modification of the third example embodiment will be explained with reference to the flowchart of Fig. 13.

The pixel identification unit 321 calculates average intensity (each of average intensities of pixels at the same location in multiple SAR images) of each pixel in the SAR image over all SAR images (step S301).

When the average intensity of the pixels is greater than a predetermined value (threshold for filtering pixel selection), the process moves to step S101 (step S302). When the average intensity of the pixel is less than or equal to the predetermined value, the process moves to step S204. In step S302, the pixel identification unit 321 targets all SAR images and compares the intensity of each pixel in each SAR image with the average intensity of the pixel in question. When the pixel identification unit 321 determines that the intensity of the pixel is greater than the average intensity of the pixel in question, the process moves to step S101. Otherwise, steps S101, S202, and S203 are skipped.

The processes of steps S101, S202, and S203 are the same as those in the second example embodiment. That is, the three-dimensional structure reconstruction unit 110 operates in the same manner as in the second example embodiment to reconstruct a three-dimensional structure of a predetermined area in the observed area (step S101). In the phase eliminator 220, the phase signal estimator 221 estimates the phase signals in the predetermined area of all SAR images by referring to the three-dimensional structure, as in the second example embodiment (step S202). In the phase eliminator 330, the phase signal eliminator 222 eliminates the phase signals estimated by the phase signal estimator 221 for all SAR images, as in the second example embodiment (step S203).

Then, the coherent change detection unit 230 performs the coherent change detection process as in the second example embodiment (step S204).

In this example embodiment, the process of estimating the phase signal (step S202) and the process of the eliminating the phase signal (step S203) using the three-dimensional structure is executed when the average intensity of the pixel is greater than a predetermined value. In other words, the process of estimating the phase signal and the process of the eliminating the phase signal are not executed for pixels with low intensity. As described above, the reliability of phase information for pixels with low intensity may be low. If the coherent change detection process is performed after the phase signal elimination process is applied to such pixels, there is rather a risk of false detection of coherent change. When the process of estimating the phase signal and the phase signal elimination process are not applied to pixels with low intensity, as in this example embodiment, the possibility of false detection of coherent change is expected to be reduced.

The change detection devices 300, 310 of above third example embodiment and its modification are configured by applying the pixel identification unit 321 to the change detection device 200 of the second example embodiment. However, the pixel identification unit 321 may be applied to the change detection device 100 of the first example embodiment.

Example embodiment 4.

In the first to third example embodiments, the three-dimensional structure reconstruction unit 110 acquires three-dimensional point cloud data representing the three-dimensional structure using a SAR tomography technique which uses multiple SAR images stored in the SAR image storage 700 so as to reconstruct the three-dimensional structure of a predetermined area in the observed area. However, the three-dimensional point cloud data may be acquired without using a SAR tomography technique.

In the fourth example embodiment, the change detection device uses other kinds of three-dimensional data, not three-dimensional point cloud data based on SAR images, to reconstruct a three-dimensional structure of a predetermined area. Such three-dimensional data include, for example, three-dimensional point cloud data acquired by LiDAR, a digital surface model (DSM), data including three-dimensional information (for example, polygon data of a structure, etc.) generated from images acquired by an optical satellite, etc. The following is an example where a change detection device uses data acquired by LiDAR, but 3D imaging devices other than LiDAR can also be used.

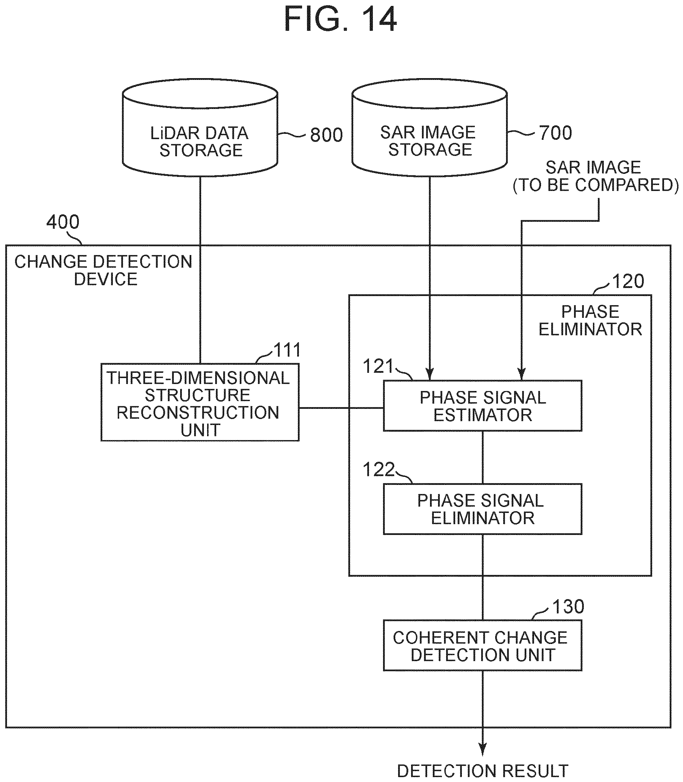

Fig. 14 is a block diagram showing a configuration example of the change detection device of the fourth example embodiment. The change detection device 400 shown in Fig. 14 comprises a three-dimensional structure reconstruction unit 111, a phase eliminator 120, and a coherent change detection unit 130.

The LiDAR data storage 800 stores three-dimensional point cloud information (three-dimensional point cloud data) that includes intensity of each point in the observed area, in advance. The information (data) including intensity is three-dimensional point group data based on the analysis result of reflected light from the observed area received by general 3D (dimension) LiDAR.

The three-dimensional structure reconstruction unit 111 estimates three-dimensional point cloud data in the SAR image from the three-dimensional point cloud data stored in the LiDAR data storage 800. For example, the three-dimensional structure reconstruction unit 111 estimates three-dimensional point cloud data in the SAR image based on a simulation for a satellite acquiring SAR images. A simulation procedure for a satellite acquiring SAR images, for example, includes a method of inputting a DSM generated from the three-dimensional point cloud data stored in the LiDAR data storage 800, transforming it to the SAR coordinate system (azimuth-range coordinates), estimating positions of single scattering, twice scattering, three times scattering, and radar shadow based on a shape of the DSM and position information of the satellite, and estimating intensity and a phase considering a reflection coefficient and roughness of the reflective surface. The three-dimensional point cloud data stored in the LiDAR data storage 800 is substantially converted to three-dimensional point cloud data in the SAR image by the three-dimensional structure reconstruction unit 111.

The phase eliminator 120 and the coherent change detection unit 130 operate similarly to those in the first example embodiment.

In this example embodiment, the change detection device 400 does not perform the process of reconstructing a three-dimensional structure by SAR tomography. Therefore, the change detection device 400 can reduce processing time compared to the change detection device 100 of the first example embodiment.

The change detection device 400 of this example embodiment is configured by applying the three-dimensional structure reconstruction unit 111 using three-dimensional point cloud data by LiDAR to the change detection device 100 of the first example embodiment. However, the three-dimensional structure reconstruction unit 111 may be applied to the change detection device 200 of the second example embodiment, the change detection device 300 of the third example embodiment, or the change detection device 310 of the modification.

As explained above, the change detection devices of each of the above example embodiments generates three-dimensional point cloud data by SAR tomography or other methods and eliminates phase components in a predetermined area (layover area) from the observation signal by using the three-dimensional point cloud data. The sensitivity of change detection by such a change detection device does not reduce even in a case where layover occurs in the observed area. In addition, the change detection device can also accurately detect coherent change in the layover area.

In addition, the change detection device does not need to perform a process of generating three-dimensional point cloud data related to the SAR image to be compared. In other words, the change detection device can perform sensitive change detection even with only one SAR image to be compared. Therefore, it does not take care for collecting SAR images to be compared, and processing a load of the change detection device does not increase so much. As a result, the coherent change detection process can be performed in a short time.

Further, since the change detection device can perform the coherent change detection in a short period of time, the change detection device can detect a change quickly when the change detection device is used in an application of monitoring an observed area on a regular basis.

Each of the above embodiments can be configured in hardware, but can also be realized by a computer program. It is also possible to configure a part of components in each of the above example embodiments in hardware and the other part in software.

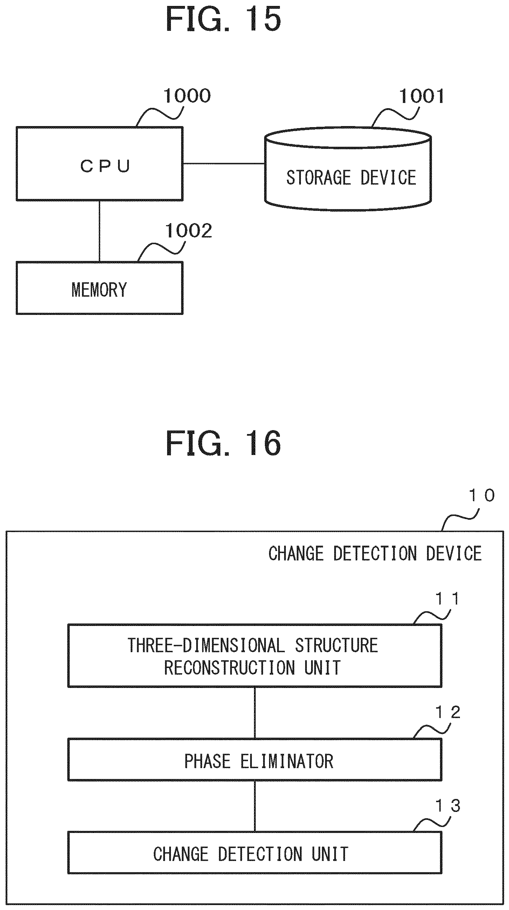

Fig. 15 is a block diagram showing an example of a computer having a CPU. The computer is implemented in the change detection device of each of the above example embodiments. The CPU 1000 executes processing in accordance with a change detection program (software component: codes) stored in a storage device 1001 to realize the functions in the above example embodiments. That is, the computer realizes the functions of the three-dimensional structure reconstruction units 110, 111, the phase eliminators 120, 220, 320, 330, and the coherent change detection units 130, 230 in the change detection devices 100, 200, 300, 310, 400 shown in Fig. 1, Fig. 7, Fig. 10, Fig. 12, and Fig. 14.

The storage device 1001 is, for example, a non-transitory computer readable media. The non-transitory computer readable medium is one of various types of tangible storage media. Specific examples of the non-transitory computer readable media include a magnetic storage medium (for example, hard disk), a magneto-optical storage medium (for example, magneto-optical disk), a CD-ROM (Compact Disc-Read Only Memory), a CD-R (Compact Disc-Recordable), a CD-R/W (Compact Disc-ReWritable), and a semiconductor memory (for example, a mask ROM, a PROM (programmable ROM), an EPROM (Erasable PROM), a flash ROM).

The program may be stored in various types of transitory computer readable media. The transitory computer readable medium is supplied with the program through, for example, a wired or wireless communication channel, i.e., through electric signals, optical signals, or electromagnetic waves.

A memory 1002 is a storage means implemented by a RAM (Random Access Memory), for example, and temporarily stores data when the CPU 1000 executes processing. It can be assumed that a program held in the storage device 1001 or a temporary computer readable medium is transferred to the memory 1002 and the CPU 1000 executes processing based on the program in the memory 1002.

Fig. 16 is a block diagram showing the main part of the change detection device. The change detection device 10 shown in Fig. 16 comprises a three-dimensional structure reconstruction unit (three-dimensional structure reconstruction means) 11 (in the example embodiments, realized by the three-dimensional structure reconstruction units 110, 111) which reconstructs a three-dimensional structure of a predetermined area (for example, a layover area) in an observed area, a phase eliminator (phase elimination means ) 12 (in the example embodiments, realized by the phase eliminators 120, 220, 320, 330) which eliminates phase signals in the predetermined area in multiple SAR images in which the observed area is taken, using the three-dimensional structure, and a change detection unit (change detection means) 13 (in the example embodiments, realized by the coherent change detection units 130 and 230) which generates a coherence image from a SAR image pair from which the phase signals are eliminated and detects change in the observed area based on coherence values of pixels constituting the coherence image.

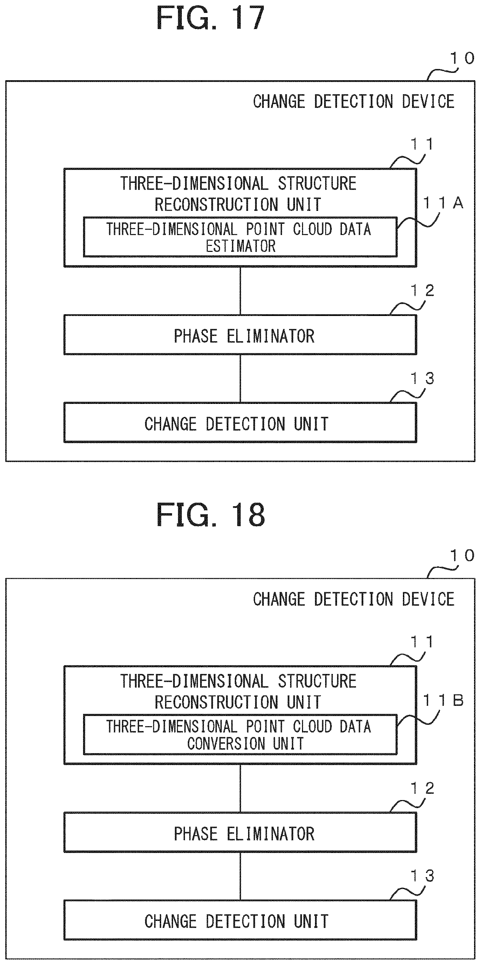

Fig. 17 is a block diagram showing the main part of another change detection device. In the change detection device 10 shown in Fig. 17, the three-dimensional structure reconstruction unit 11 includes a three-dimensional point cloud data estimation unit 11A (in the example embodiments, realized by the three-dimensional structure reconstruction unit 110) which estimates three-dimensional point cloud data including intensity and phase information using SAR tomography, as the three-dimensional structure.

Fig. 18 is a block diagram showing the main part of still another change detection device. In the change detection device 10 shown in Fig. 18, the three-dimensional structure reconstruction unit 11 includes a three-dimensional point cloud data conversion unit (three-dimensional point cloud data conversion means) 11B (in the example embodiments, realized by the three-dimensional structure reconstruction unit 111 which executes a simulation related to SAR) for estimating three-dimensional point cloud data including intensity and phase information using data including three-dimensional information (as an example, three-dimensional point cloud data by LiDAR).

Apart of or all of the above example embodiments may also be described as, but not limited to, the following supplementary notes.

(Supplementary note 1) A change detection device comprising:

three-dimensional structure reconstruction means for reconstructing a three-dimensional structure of a predetermined area in an observed area;

phase elimination means for eliminating phase signals in the predetermined area in multiple SAR images in which the observed area is taken, using the three-dimensional structure; and change detection means for generating a coherence image from a SAR image pair from which the phase signals are eliminated and detecting change in the observed area based on coherence values of pixels constituting the coherence image.

(Supplementary note 2) The change detection device according to Supplementary note 1, wherein the three-dimensional structure reconstruction means includes three-dimensional point cloud data estimation means for estimating three-dimensional point cloud data including intensity and phase information using SAR tomography, as the three-dimensional structure.

(Supplementary note 3) The change detection device according to Supplementary note 1 or 2, wherein

the phase elimination means eliminates the phase signals in the predetermined area in each SAR image among a group of SAR images acquired by a radar mounted on a flying object, and the change detection means generates the coherence images from multiple SAR image pairs selected from the group of SAR images and detects the change in the observed area based on whether or not there exists the coherence image including a coherence value whose difference from a typical coherence value is greater than a predetermined value in the coherence images.

(Supplementary note 4) The change detection device according to any one of Supplementary notes 1 to 3, wherein the phase elimination means eliminates the phase signal of the pixel whose intensity is greater than a predetermined intensity value in the SAR image.

(Supplementary note 5) The change detection device according to Supplementary note 1, wherein the three-dimensional structure reconstruction means includes three-dimensional point cloud data conversion means for estimating three-dimensional point cloud data including intensity and phase information using data including three-dimensional information.

(Supplementary note 6) A change detection method comprising:

reconstructing a three-dimensional structure of a predetermined area in an observed area; eliminating phase signals in the predetermined area in multiple SAR images in which the observed area is taken, using the three-dimensional structure; and

generating a coherence image from a SAR image pair from which the phase signals are eliminated and detecting change in the observed area based on coherence values of pixels constituting the coherence image.

(Supplementary note 7) The change detection method according to Supplementary note 6, wherein three-dimensional point cloud data including intensity and phase information using SAR tomography is estimated, as the three-dimensional structure.

(Supplementary note 8) The change detection method according to Supplementary note 6 or 7, wherein

the phase signals in the predetermined area in each SAR image among a group of SAR images acquired by a radar mounted on a flying object are eliminated, the coherence images are generated from multiple SAR image pairs selected from the group of SAR images, and the change in the observed area is detected based on whether or not there exists the coherence image including a coherence value whose difference from a typical coherence value is greater than a predetermined value in the coherence images.

(Supplementary note 9) The change detection method according to any one of Supplementary notes 6 to 8, wherein the phase signal of the pixel whose intensity is greater than a predetermined intensity value in the SAR image is eliminated.

(Supplementary note 10) The change detection method according to Supplementary note 6, wherein three-dimensional point cloud data including intensity and phase information using data including three-dimensional information is estimated using data including three-dimensional information.

(Supplementary note 11) A computer readable recording medium storing a change detection program, wherein

the change detection program causes a computer to execute:
a process of reconstructing a three-dimensional structure of a predetermined area in an observed area;
a process of eliminating phase signals in the predetermined area in multiple SAR images in which the observed area is taken, using the three-dimensional structure; and
a process of generating a coherence image from a SAR image pair from which the phase signals are eliminated and detecting change in the observed area based on coherence values of pixels constituting the coherence image.

(Supplementary note 12) The computer readable recording medium according to Supplementary note 11,

wherein the change detection program causes the computer to further execute

a process of estimating three-dimensional point cloud data including intensity and phase information using SAR tomography, as the three-dimensional structure.

(Supplementary note 13) A change detection program causing a computer to execute:

a process of reconstructing a three-dimensional structure of a predetermined area in an observed area;

a process of eliminating phase signals in the predetermined area in multiple SAR images in which the observed area is taken, using the three-dimensional structure; and

a process of generating a coherence image from a SAR image pair from which the phase signals are eliminated and detecting change in the observed area based on coherence values of pixels constituting the coherence image.

(Supplementary note 14) The change detection program according to Supplementary note 13, causing the computer to further execute

a process of estimating three-dimensional point cloud data including intensity and phase information using SAR tomography, as the three-dimensional structure.

Although the invention of the present application has been described above with reference to example embodiments, the present invention is not limited to the above example embodiments. Various changes can be made to the configuration and details of the present invention that can be understood by those skilled in the art within the scope of the present invention.

**Reference Signs List**

10 change detection device
11 three-dimensional structure reconstruction unit
11A three-dimensional point cloud data estimator
11B three-dimensional point cloud data conversion unit
12 phase eliminator
13 change detection unit
100, 200, 300, 310, 400 change detection device
110, 111 three-dimensional structure reconstruction unit
120, 220, 320, 330 phase eliminator

121, 221 phase signal estimator
122, 222, 223 phase signal eliminator
130 , 230 coherent change detection unit
321 pixel identification unit
700 SAR image storage
800 LiDAR data storage
1000 CPU
1001 storage device
1002 memory

**Claims**

1. A change detection device comprising:

three-dimensional structure reconstruction means for reconstructing a three-dimensional structure of a predetermined area in an observed area;

phase elimination means for eliminating phase signals in the predetermined area in multiple SAR images in which the observed area is taken, using the three-dimensional structure; and

change detection means for generating a coherence image from a SAR image pair from which the phase signals are eliminated and detecting change in the observed area based on coherence values of pixels constituting the coherence image.

2. The change detection device according to claim 1, wherein

the three-dimensional structure reconstruction means includes three-dimensional point cloud data estimation means for estimating three-dimensional point cloud data including intensity and phase information using SAR tomography, as the three-dimensional structure.

3. The change detection device according to claim 1 or 2, wherein

the phase elimination means eliminates the phase signals in the predetermined area in each SAR image among a group of SAR images acquired by a radar mounted on a flying object, and the change detection means generates the coherence images from multiple SAR image pairs selected from the group of SAR images and detects the change in the observed area based on whether or not there exists the coherence image including a coherence value whose difference from a typical coherence value is greater than a predetermined value in the coherence images.

4. The change detection device according to any one of claims 1 to 3, wherein the phase elimination means eliminates the phase signal of the pixel whose intensity is greater than a predetermined intensity value in the SAR image.

5. The change detection device according to claim 1, wherein
the three-dimensional structure reconstruction means includes three-dimensional point cloud data conversion means for estimating three-dimensional point cloud data including intensity and phase information using data including three-dimensional information.

6. A change detection method comprising:

reconstructing a three-dimensional structure of a predetermined area in an observed area;
eliminating phase signals in the predetermined area in multiple SAR images in which the observed area is taken, using the three-dimensional structure; and
generating a coherence image from a SAR image pair from which the phase signals are eliminated and detecting change in the observed area based on coherence values of pixels constituting the coherence image.

7. The change detection method according to claim 6, wherein
three-dimensional point cloud data including intensity and phase information using SAR tomography is estimated, as the three-dimensional structure.

8. The change detection method according to claim 6 or 7, wherein

the phase signals in the predetermined area in each SAR image among a group of SAR images acquired by a radar mounted on a flying object are eliminated,
the coherence images are generated from multiple SAR image pairs selected from the group of SAR images, and
the change in the observed area is detected based on whether or not there exists the coherence image including a coherence value whose difference from a typical coherence value is greater than a predetermined value in the coherence images.

9. The change detection method according to any one of claims 6 to 8, wherein
the phase signal of the pixel whose intensity is greater than a predetermined intensity value in the SAR image is eliminated.

10. The change detection method according to claim 6, wherein
three-dimensional point cloud data including intensity and phase information using data including three-dimensional information is estimated using data including three-dimensional information.

11. A computer readable recording medium storing a change detection program, wherein

the change detection program causes a computer to execute:
a process of reconstructing a three-dimensional structure of a predetermined area in an observed area;
a process of eliminating phase signals in the predetermined area in multiple SAR images in which the observed area is taken, using the three-dimensional structure; and
a process of generating a coherence image from a SAR image pair from which the phase signals are eliminated and detecting change in the observed area based on coherence values of pixels constituting the coherence image.

12. The computer readable recording medium according to claim 11,

wherein the change detection program causes the computer to further execute
a process of estimating three-dimensional point cloud data including intensity and phase information using SAR tomography, as the three-dimensional structure.

# FIG. 1

SAR IMAGE STORAGE — 700

SAR IMAGE (TO BE COMPARED)

100

CHANGE DETECTION DEVICE

120

PHASE ELIMINATOR

110

THREE-DIMENSIONAL STRUCTURE RECONSTRUCTION UNIT

121

PHASE SIGNAL ESTIMATOR

122

PHASE SIGNAL ELIMINATOR

130

COHERENT CHANGE DETECTION UNIT

DETECTION RESULT

# FIG. 2

(CHANGE DETECTION PROCESS: FIRST EXAMPLE EMBODIMENT)

START

S101
RECONSTRUCT 3D STRUCTURE OF PREDETERMINED AREA FROM GROUP OF EXISTING SAR IMAGES

S102
ESTIMATE PHASE SIGNAL REGARDING SAR IMAGE PAIR

S103
ELIMINATE PHASE SIGNAL REGARDING SAR IMAGE PAIR

S104
PERFORM COHERENT CHANGE DETECTION PROCESS

END

# FIG. 3

s :ELEVATION DIRECTION
r :RANGE DIRECTION
N :TOTAL NUMBER OF OBSERVATIONS

SYNTHETIC APERTURE
FOR ELEVATION
DIRECTION

N

n

1

LAYOVER AREA

$s_{l3}$

$s_{l2}$

$s_{l1}$

s

REFERENCE PLANE

r

INTENSITY

GROUND
SURFACE

LOW–RISE
HOUSE

HIGH–RISE
STRUCTURE

INTENSITY DISTRIBUTION

$s_{l1}$    $s_{l2}$    $s_{l3}$    ELEVATION POSITION (s)

16

# FIG. 4
(THREE-DIMENSIONAL STRUCTURE
RECONSTRUCTION PROCESS)

START

ESTIMATE STEERING MATRIX FROM OBSERVED VALUES ～ S111

CALCULATE COMPLEX REFLECTIVITY DISTRIBUTION $\gamma$ USING OBSERVED VALUES AND STEERING MATRIX ～ S112

END

# FIG. 5
(PHASE SIGNAL ELIMINATION PROCESS)

START

ESTIMATE PHASE-TO-ELEVATION CONVERSION COEFFICIENT FOR EACH DATA (PIXEL) OF SAR IMAGE ～ S121

ESTIMATE STEERING MATRIX $R_{all}$ ～ S122

ESTIMATE RECEIVED SIGNAL MODEL $g_{model}$ FOR EACH PIXEL USING $\gamma$ AND $R_{all}$ ～ S123

GENERATE OBSERVED SIGNALS $g_{obs}$ FOR EACH PIXEL ～ S124

ELIMINATE PHASE PREDICTED FROM RECEIVED SIGNAL MODEL $g_{model}$ FROM OBSERVED SIGNALS $g_{obs}$ ～ S125

END

# FIG. 6

(COHERENT CHANGE DETECTION PROCESS)

START

S131
CALCULATE COHERENCE VALUES OF SAR IMAGE PAIRS

S132
IS THERE PORTION WHERE COHERENCE VALUE IS SMALLER THAN PREDETERMINED VALUE?

NO

YES

S133
DETERMINE CHANGE EXITS

S134
DETERMINE NO CHANGE

END

# FIG. 7

SAR IMAGE STORAGE ~ 7 0 0

ONE OR MORE SAR IMAGES (TO BE COMPARED)

2 0 0

CHANGE DETECTION DEVICE

2 2 0

PHASE ELIMINATOR

1 1 0

THREE-DIMENSIONAL STRUCTURE RECONSTRUCTION UNIT

2 2 1

PHASE SIGNAL ESTIMATOR

2 2 2

PHASE SIGNAL ELIMINATOR

2 3 0

COHERENT CHANGE DETECTION UNIT

DETECTION RESULT

# FIG. 8

(CHANGE DETECTION PROCESS:
SECOND EXAMPLE EMBODIMENT)

START

RECONSTRUCT 3D STRUCTURE OF
PREDETERMINED AREA FROM
GROUP OF EXISTING SAR IMAGES — S101

ESTIMATE PHASE SIGNALS FOR
EACH SAR IMAGE — S202

ELIMINATE PHASE SIGNALS FOR
EACH SAR IMAGE — S203

PERFORM COHERENT CHANGE
DETECTION PROCESS — S204

END

...

# FIG. 9

(COHERENT CHANGE DETECTION PROCESS)

```
                    ┌──────────────┐
                    │    START     │
                    └──────┬───────┘
                           │           S230
              ┌────────────▼──────────────┐
              │ CALCULATE COHERENCE VALUES OF │
              │    ALL SAR IMAGE PAIRS        │
              └────────────┬──────────────┘
                           │           S231
              ┌────────────▼──────────────┐
              │     CALCULATE TYPICAL       │
              │     COHERENCE VALUE         │
              └────────────┬──────────────┘
                           │           S232
                      ARE THERE
              MULTIPLE SAR IMAGE PAIRS
           PRESENTING COHERENCE VALUE        NO
           GREATLY DIFFERENT FROM
             TYPICAL COHERENCE
                   VALUE?
                          YES
         S233                              S234
   ┌──────────────────────┐      ┌──────────────────────┐
   │ DETERMINE CHANGE EXITS │      │ DETERMINE NO CHANGE  │
   └───────────┬──────────┘      └──────────┬───────────┘
               │                             │
               ▼                             │
         ┌──────────┐                        │
         │   END    │◄───────────────────────┘
         └──────────┘
```

# FIG. 10

# FIG. 11

(CHANGE DETECTION PROCESS:
THIRD EXAMPLE EMBODIMENT)

START

RECONSTRUCT 3D STRUCTURE OF
PREDETERMINED AREA FROM
GROUP OF EXISTING SAR IMAGES — S101

ESTIMATE PHASE SIGNALS FOR
EACH SAR IMAGE — S202

CALCULATE AVERAGE INTENSITY OF
EACH PIXEL — S301

S302

IS AVERAGE
INTENSITY OF PIXEL GREATER
THAN PREDETERMINED
VALUE? → NO

YES

ELIMINATE PHASE SIGNALS FOR
EACH SAR IMAGE — S203A

PERFORM COHERENT CHANGE
DETECTION PROCESS — S204

END

# FIG. 12

# FIG. 13

(CHANGE DETECTION PROCESS:
THIRD EXAMPLE EMBODIMENT(MODIFICATION))

```
                    ( START )
                        │
                        ▼
    ┌─────────────────────────────────────┐
    │ CALCULATE AVERAGE INTENSITY OF       │ ∼ S301
    │ EACH PIXEL                           │
    └─────────────────────────────────────┘
                        │
                        ▼                        S302
                  ╱           ╲
             ╱    IS AVERAGE    ╲
        ╱   INTENSITY OF PIXEL GREATER ╲       NO
        ╲   THAN PREDETERMINED        ╱ ──────────┐
             ╲     VALUE?      ╱                   │
                  ╲         ╱                      │
                        │ YES                      │
                        ▼                          │
    ┌─────────────────────────────────────┐       │
    │ RECONSTRUCT 3D STRUCTURE OF          │ ∼ S101│
    │ PREDETERMINED AREA FROM              │       │
    │ GROUP OF EXISTING SAR IMAGES         │       │
    └─────────────────────────────────────┘       │
                        │                          │
                        ▼                          │
    ┌─────────────────────────────────────┐       │
    │ ESTIMATE PHASE SIGNALS FOR           │ ∼ S202│
    │ EACH SAR IMAGE                       │       │
    └─────────────────────────────────────┘       │
                        │                          │
                        ▼                          │
    ┌─────────────────────────────────────┐       │
    │ ELIMINATE PHASE SIGNALS FOR          │ ∼ S203│
    │ EACH SAR IMAGE                       │       │
    └─────────────────────────────────────┘       │
                        │ ◄────────────────────────┘
                        ▼
    ┌─────────────────────────────────────┐
    │ PERFORM COHERENT CHANGE              │ ∼ S204
    │ DETECTION PROCESS                    │
    └─────────────────────────────────────┘
                        │
                        ▼
                    ( END )
```

# FIG. 14

DETECTION RESULT

# FIG. 15

```
        1000                          1001
   ┌──────────────┐              ┌──────────────────┐
   │              │              │                  │
   │    C P U     │──────────────│  STORAGE DEVICE  │
   │              │              │                  │
   └──────┬───────┘              └──────────────────┘
          │    1002
   ┌──────┴───────┐
   │              │
   │   MEMORY     │
   │              │
   └──────────────┘
```

# FIG. 16

```
                                                    1 0
 ┌──────────────────────────────────────────────────────┐
 │                          CHANGE DETECTION DEVICE       │
 │                                                        │
 │                                               1 1      │
 │   ┌──────────────────────────────────────────────┐    │
 │   │      THREE-DIMENSIONAL STRUCTURE              │    │
 │   │      RECONSTRUCTION UNIT                      │    │
 │   └──────────────────────────────────────────────┘    │
 │                          │                    1 2      │
 │   ┌──────────────────────────────────────────────┐    │
 │   │             PHASE ELIMINATOR                  │    │
 │   └──────────────────────────────────────────────┘    │
 │                          │                    1 3      │
 │   ┌──────────────────────────────────────────────┐    │
 │   │          CHANGE DETECTION UNIT                │    │
 │   └──────────────────────────────────────────────┘    │
 │                                                        │
 └──────────────────────────────────────────────────────┘
```

# FIG. 17

10

CHANGE DETECTION DEVICE

11

THREE-DIMENSIONAL STRUCTURE
RECONSTRUCTION UNIT

11A

THREE-DIMENSIONAL POINT CLOUD DATA
ESTIMATOR

12

PHASE ELIMINATOR

13

CHANGE DETECTION UNIT

# FIG. 18

10

CHANGE DETECTION DEVICE

11

THREE-DIMENSIONAL STRUCTURE
RECONSTRUCTION UNIT

11B

THREE-DIMENSIONAL POINT CLOUD DATA
CONVERSION UNIT

12

PHASE ELIMINATOR

13

CHANGE DETECTION UNIT

## INTERNATIONAL SEARCH REPORT

| | International application No. |
|---|---|
| | PCT/JP2021/009209 |

**A. CLASSIFICATION OF SUBJECT MATTER**
Int. Cl. G01S13/90(2006.01)i
FI: G01S13/90

According to International Patent Classification (IPC) or to both national classification and IPC

**B. FIELDS SEARCHED**

Minimum documentation searched (classification system followed by classification symbols)
Int. Cl. G01S7/00-7/42, G01S13/00-13/95, G06T1/00-19/20

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2019/087673 A1 (NEC CORP.) 09 May 2019 (2019-05-09), paragraphs [0013]-[0087], fig. 1-6 | 1, 3-6, 8-11 |
| Y | US 2019/0285741 A1 (ELTA SYSTEMS LTD.) 19 September 2019 (2019-09-19), paragraphs [0045]-[0082], fig. 1-5 | 1, 3-6, 8-11 |
| A | JP 2021-21703 A (PASCO CORP.) 18 February 2021 (2021-02-18), entire text, all drawings | 1-12 |
| A | WO 2015/151134 A1 (MITSUBISHI ELECTRIC CORP.) 08 October 2015 (2015-10-08), entire text, all drawings | 1-12 |

☒ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18.05.2021 | 01.06.2021 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2021/009209 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2008/125929 A2 (UNIVERSITY OF PISA) 23 October 2008 (2008-10-23), entire text, all drawings | 1-12 |
| A | WO 2015/008310 A1 (CONSIGLIO NAZIONALE RICERCHE) 22 January 2015 (2015-01-22), entire text, all drawings | 1-12 |

Form PCT/ISA/210 (continuation of second sheet) (January 2015)

**INTERNATIONAL SEARCH REPORT**
Information on patent family members

International application No.

PCT/JP2021/009209

| Patent Documents referred to in the Report | Publication Date | Patent Family | Publication Date |
|---|---|---|---|
| WO 2019/087673 A1 | 09.05.2019 | (Family: none) | |
| US 2019/0285741 A1 | 19.09.2019 | EP 3540462 A1 SG 10201902035P A SG 10201912481V A | |
| JP 2021-21703 A | 18.02.2021 | (Family: none) | |
| WO 2015/151134 A1 | 08.10.2015 | (Family: none) | |
| WO 2008/125929 A2 | 23.10.2008 | EP 2160628 A2 IT PI20070012 A1 | |
| WO 2015/008310 A1 | 22.01.2015 | EP 3022582 A1 IT RM20130426 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3540462 A

- JP 2008185375 A